# EUROPÄISCHE PATENTSCHRIFT

(11) **EP 2 827 173 B1**
(45) Veröffentlichungstag und Bekanntmachung des Hinweises auf die Patenterteilung: **03.02.2016**
(21) Anmeldenummer: 14173382.4
(22) Anmeldetag: 23.06.2014
(51) Int. Cl.: G01S 17/42, G01S 7/481, G02C 7/06

(54) **Optoelektronischer Sensor und Verfahren zur Erfassung von Objekten**
Optoelectronic sensor and method for detecting objects
Capteur optoélectronique et procédé destiné à la détection d'objets

(30) Priorität: 18.07.2013 DE 102013107695
(43) Veröffentlichungstag der Anmeldung: 21.01.2015
(73) Patentinhaber: SICK AG, 79183 Waldkirch (DE)
(72) Erfinder: Nübling, Ralf Ulrich, 79211 Denzlingen (DE); Jägel, Matthias, 79104 Freiburg (DE)
(74) Vertreter: Ludewigt, Christoph

(56) Entgegenhaltungen:
- EP-A1- 1 890 168
- EP-A2- 1 975 571
- EP-A2- 2 065 724
- US-A- 5 691 687

## Beschreibung

Die Erfindung betrifft einen optoelektronischen Sensor und ein Verfahren zur Erfassung von Objekten in einem Überwachungsbereich nach dem Oberbegriff von Anspruch 1 beziehungsweise 10.

Für Abstandsmessungen, die einen großen horizontalen Winkelbereich des Messsystems erforderlich machen, eignen sich optoelektronische Systeme und besonders Laserscanner. In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder durch mehrere Antastungen desselben Objekts an verschieden Stellen dessen Kontur bestimmen. Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner befördert wird. So können auch dreidimensionale Konturen ausgemessen werden.

Neben solchen Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Die Abtastung der Überwachungsebene in einem Laserscanner wird üblicherweise dadurch erreicht, dass der Sendestrahl auf einen rotierenden Drehspiegel trifft. Durch den Spiegel ergeben sich sehr hohe Anforderungen an die Ausrichtung der Lichtsender und Lichtempfänger zur Drehachse. Abweichungen davon führen zu einer verbogenen Überwachungsebene. Außerdem sind solche Optikeinheiten baugroß, weil sich immer ein Teil der Objektweite über den Spiegel bis zur Empfangsoptik in das Gerät erstreckt. Streulichteffekte an der Frontscheibe durch die Frontscheibe selbst oder deren Verunreinigung führen zu einer Beeinträchtigung der Sensorfunktion.

Es ist auch bekannt, den Drehspiegel dadurch zu ersetzen, dass der gesamte Messkopf mit Lichtsender und Lichtempfänger rotiert. Ein solcher Scanner wird in der DE 197 57 849 B4 offenbart. In der EP 2 388 619 A1 ist ebenfalls eine drehbare Sende-/Empfangseinheit vorgesehen. Sie wird beispielsweise nach dem Transformationsprinzip von den drehfesten Bereichen des Sensors mit Energie versorgt, während die Datenübertragung drahtlos per Funk oder auf optischem Wege erfolgt. Bei solchen Laserscannern mit drehbarem Messkopf stellen sich besondere Herausforderungen an den Optikaufbau, die im Stand der Technik nicht ausreichend gelöst sind.

Die EP 2 378 309 A1 beschreibt einen Laserscanner, dessen Ablenkeinheit einen konkaven Spiegel aufweist, der in mehrere Zonen für Empfangslicht aus unterschiedlichen Entfernungen aufgeteilt ist. Das ändert aber nichts daran, dass dieser Laserscanner grundsätzlich nach dem Prinzip eines Drehspiegels aufgebaut ist und die dazu genannten Nachteile aufweist.

Aus der DE 199 28 958 A1 ist ein weiterer Laserscanner bekannt, dessen Ablenkeinheit von einer drehbaren, kugelförmigen Linse mit verspiegelten Aussparungen gebildet wird. Das Sendelicht einer feststehenden Laserdiode wird in einen Lichtleiter eingekoppelt, der in die kugelförmige Linse führt. Entsprechend wird das Empfangslicht mit einem weiteren Lichtleiter einer feststehenden Photodiode zugeführt. Die kugelförmige Linse ist ein vergleichsweise großes, aufwändig herzustellendes und zu bewegendes Bauteil, und die Anbindung der Lichtleiter erfordert weitere Maßnahmen.

Aus der EP 2 065 724 A2 ist ein Lichterfassungs- und Entfernungsmesssystem bekannt, bei dem eine Spiegeleinheit um eine Drehachse rotiert. Diese Spiegeleinheit weist einen flachen und einen gekrümmten Spiegel auf. Es wird erwähnt, dass auch Lichtsender und Lichtempfänger rotieren können.

Die EP 1 890 168 A1 offenbart einen Laserscanner mit Drehbewegung in zwei Achsen, in dem ein Rotor an einem Stator um eine erste Drehachse gelagert ist, der wiederum einen um eine zweite Drehachse drehbar gelagerten Drehkörper aufweist. In dem Rotor ist eine Leiterplatte mit Lichtsender und Lichtempfänger angeordnet, die über Lichtleiter an den Drehkörper gekoppelt werden. In dem Drehkörper befinden sich mehrere Linsen und flache Ablenkspiegel.

Daher ist Aufgabe der Erfindung, den Aufbau eines optischen Sensors mit periodisch bewegtem Abtaststrahl weiter zu verbessern.

Diese Aufgabe wird durch einen optoelektronischen Sensor und ein Verfahren zur Erfassung von Objekten in einem Überwachungsbereich nach Anspruch 1 beziehungsweise 10 gelöst. Dabei geht die Erfindung von dem Grundgedanken einer mitbewegten, insbesondere kontinuierlich rotierenden Optikeinheit aus. Um den Optikaufbau weiter zu optimieren, ist eine katadioptrische Empfangsoptik vorgesehen, die also mindestens eine das Empfangslicht refraktär bündelnde Empfangslinse und ein reflexiv bündelndes Spiegelelement umfasst, die mit dem Lichtsender und dem Lichtempfänger in der Optikeinheit untergebracht sind. Durch diesen Aufbau wird das Licht ohne die sonst übliche Umlenkung an einem Drehspiegel oder mittels Lichtleitern direkt abgestrahlt und empfangen. Es findet nur an optischen Elementen eine Strahlformung statt, die mit der Optikeinheit bewegt sind und daher bezüglich Lichtsender und Lichtempfänger ruhen.

Die Erfindung hat den Vorteil, dass wegen der mitbewegten Optikeinheit ein hohes Verhältnis von optischer Nutzfläche zu Restfunktionen und so eine besonders geringe Baugröße erreicht werden kann. Die katadroptische Empfangsoptik ermöglicht dabei eine optimale Ausnutzung des Bauraums in der Optikeinheit und damit eine zusätzliche Verkleinerung des Sensors. Da der optische Weg zwischen Frontscheibe und Optikeinheit extrem kurz gehalten werden kann, reagiert ein erfindungsgemäßer Sensor unkritisch auf Streulicht, insbesondere Frontscheibenreflexe und Verunreinigungen der Frontscheibe. Der Scanner kann bei großen Öffnungswinkeln einen Überwachungsbereich von bis zu 360° erfassen.

Bevorzugt ist die Empfangslinse eine Sammellinse und/oder das Spiegelelement ein Hohlspiegel. Dadurch werden die gewünschten Strahlbündelungen erreicht, besonders in Kombination beider Elemente der derart aufgebauten katadioptrischen Empfangsoptik.

Vorzugsweise ist eine Sendeoptik in die Empfangsoptik integriert. Die Sendeoptik ist üblicherweise wesentlich kleiner als die Empfangsoptik, da sie nur eine bekannte im Wesentlichen punktförmige Lichtquelle kollimiert. Dadurch ist eine solche Integration mit geringem Bauraum- und Justagebedarf möglich.

Die Sendeoptik ist noch bevorzugter als Sendelinse im Zentrum der Empfangsoptik ausgebildet. Mit einer konzentrischen Doppellinse ist dann eine kompakte mitdrehende Optik geschaffen. Alternativ ist auch eine biaxiale Anordnung denkbar, insbesondere mit einer Doppellinse, die nebeneinander angeordnete Empfangs- und Sendelinsen aufweist.

Zwischen Lichtsender und Sendeoptik ist vorzugsweise ein lichtundurchlässiger Tubus vorgesehen. Dadurch wird ein optisches Übersprechen unterdrückt, also verhindert, dass Sendelicht ohne den Weg über den Überwachungsbereich innerhalb des Sensors als Störlicht in den Lichtempfänger gelangt. Durch die Anordnung von Lichtsender und Sendeoptik innerhalb der Optikeinheit kann der Tubus problemlos in der richtigen Lage untergebracht und im Betrieb in justierter Position gehalten werden.

In der Optikeinheit ist bevorzugt eine gemeinsame Elektronikkarte vorgesehen, auf welcher der Lichtsender und der Lichtempfänger untergebracht sind. Dadurch wird der Sensor nochmals kompakter. Die gemeinsame Elektronikkarte kann zudem Steuerungs- und Auswertungsfunktionen umfassen, insbesondere solche, für die eine Verarbeitung nahe an Quelle beziehungsweise Ziel erforderlich oder nützlich ist, beispielsweise Verstärkung, analoge Vorverarbeitung oder Digitalisierung des Empfangssignals.

Der Lichtsender ist vorzugsweise auf einer Vorderseite und der Lichtempfänger auf einer Rückseite der gemeinsamen Elektronikkarte vorgesehen. Dieser Aufbau nutzt die Raumaufteilung der katadioptrischen Empfangsoptik optimal aus. Es ist reine Konvention, welche Seite als die Vorder- oder Rückseite der gemeinsamen Elektronikkarte aufzufassen ist.

Die gemeinsame Elektronikkarte ist bevorzugt auf der Drehachse angeordnet. Dadurch wird eine Unwucht bei der Bewegung der Optikeinheit vermieden, und diese Anordnung ist gut mit dem Optikaufbau verträglich. Im praktisch besonders relevanten Fall einer zumindest im Wesentlichen rechteckigen Elektronikkarte fallen vorzugsweise die Symmetrieachse parallel zu der langen Seite der Rechtecksform und die Drehachse zusammen.

Die gemeinsame Elektronikkarte weist bevorzugt eine Schnittstelle zur drahtlosen Datenübertragung und/oder drahtlosen Energieversorgung auf. Über die drahtlose Schnittstelle wird beispielsweise der Lichtsender mit einem gewünschten Sendemuster angesteuert und das aus dem remittierten Licht erzeugte Empfangssignal übertragen. Die Schnittstelle hat ein Gegenstück im als Sockel bezeichneten, nicht mit der Optikeinheit mitbewegten Teil des Sensors. Dort in dem Sockel befindet sich vorzugsweise derjenige Teil der Steuer- und Auswertungsfunktionalität, bei dem keine große Nähe zu Lichtsender und Lichtempfänger erforderlich ist. Dadurch müssen weniger beziehungsweise nur kleinere Elemente mitbewegt und weniger Daten und Energie übertragen werden. Andererseits kann die Aufteilung in mitbewegte und stationäre Elektronikanteile für verschiedene Ausführungsformen variieren. Beispielsweise kann es vorteilhaft sein, Teilauswertungen oder Vorverarbeitungen schon auf einer mitdrehenden Elektronikkarte vorzunehmen, beispielsweise weil dann die zu übertragenden Daten gegenüber den Rohdaten erheblich reduziert sind oder weil die Qualität der drahtlos übertragenen Daten ohne die Vorverarbeitung leiden würde.

Die Auswertungseinheit ist bevorzugt dafür ausgebildet, eine Lichtlaufzeit zwischen Aussenden des Sendelichtstrahls und Empfang des remittierten Lichts und daraus einen Objektabstand zu berechnen. Zusätzlich kann auch eine Winkelmesseinheit vorgesehen sein, welche den Winkel bestimmt, in den jeweils der Sendelichtstrahl umgelenkt beziehungsweise aus dem remittiertes Licht empfangen wird.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die einzige Figur der Zeichnung zeigt in:

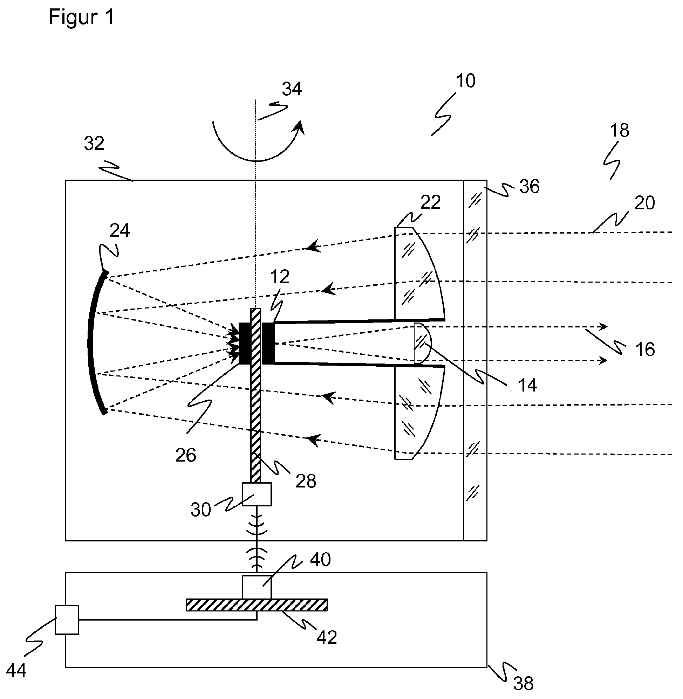

- Fig. 1: eine schematische Schnittdarstellung durch einen Laserscanner.

Fig. 1 zeigt eine schematische Schnittdarstellung durch einen optoelektronischen Sensor in einer Ausführungsform als Laserscanner 10. Ein Lichtsender 12, beispielsweise mit einer Laserlichtquelle, erzeugt mit Hilfe einer Sendeoptik 14 einen Sendelichtstrahl 16, der in eine Überwachungsebene 18 ausgesandt wird. Zur Vermeidung von Streulicht innerhalb des Laserscanner 10 wird der interne Lichtweg des Sendelichtstrahls 16 von einem lichtundurchlässigen Tubus 17 abgeschirmt. Trifft der Sendelichtstrahl 16 in dem Überwachungsbereich 18 auf ein Objekt, so kehrt ein entsprechender Lichtstrahl als remittiertes Licht 20 zu dem Laserscanner 10 zurück.

Zur Bündelung des remittierten Lichts 20 ist eine katadioptrische Empfangsoptik mit refraktiven und reflexiven strahlformenden Elementen vorgesehen. Figur 1 zeigt ein Beispiel mit zunächst einer konvexen Empfangslinse 22 und im weiteren Strahlverlauf des remittierten Lichts 20 einem konkaven Spiegelelement 24. Durch die zweistufige Bündelung wird das remittierte Licht 20 auf einen Lichtempfänger 26 fokussiert, beispielsweise eine Photodiode, und dort in ein elektrisches Empfangssignal gewandelt.

Lichtsender 12 und Lichtempfänger 26 sind auf Vorder- und Rückseite einer gemeinsamen Elektronikkarte 28 vorgesehen, die zentral und senkrecht zu den optischen Achsen von Lichtsender 12 und Lichtempfänger 26 angeordnet ist. Überall dort, wo die Elektronikkarte 28 den Lichtweg des remittierten Lichts 20 schneidet oder berührt, wird nach Möglichkeit wenig abschattendes Material verwendet, also nur dünne Verbindungsstege oder Löcher beziehungsweise transparente Bereiche verwendet. Die Elektronikkarte 28 weist weiterhin eine mitbewegte Schnittstelle 30 für drahtlose Datenübertragung beziehungsweise Energieversorgung auf oder ist damit verbunden.

Die bisher genannten Elemente, also insbesondere Lichtsender 12, Sendeoptik 14, Empfangsoptik mit Empfangslinse 22 und Spiegelelement 24, Lichtempfänger 26, Elektronikkarte 28 und mitbewegte Schnittstelle 30, sind Teil einer Optikeinheit 32, die von einem nicht dargestellten Motor in eine periodische Bewegung, insbesondere eine kontinuierliche Drehbewegung um eine Drehachse 34 versetzt wird. Dadurch wird die Überwachungsebene 20 abgetastet.

Die Optikeinheit 32 kann von einem eigenen Gehäuse umschlossen sein oder sich in einem Gehäuse des Laserscanners 10 befinden. Dort, wo der Sendelichtstrahl 16 austritt und das remittierte Licht 20 eintritt, wird das Gehäuse von einer für den relevanten Wellenlängenbereich durchlässigen Frontscheibe 36 abgeschlossen. Der Lichtweg zwischen Frontscheibe 36 und Empfangslinse 22 ist so klein, dass Streulichteffekte insbesondere durch die Frontscheibe 36 selbst oder deren Verunreinigung wenig Auswirkungen haben.

Als Gegenstück zu der beweglichen Optikeinheit 32 weist der Laserscanner 10 einen Sockel 38 auf, welcher den nicht gezeigten Motor umfasst und stationär bleibt, also keine Drehbewegung vollzieht. Ebenfalls nicht gezeigt ist eine von Laserscannern allgemein bekannte Winkelmesseinheit, welche die jeweilige Winkelstellung der Optikeinheit 32 bestimmt.

In dem Sockel 38 ist eine stationäre Schnittstelle 40 vorgesehen, die in drahtloser Verbindung mit der mitbewegten Schnittstelle 30 steht. Eine stationäre Steuer- und Auswertungseinheit in dem Sockel 38 ist als weitere Elektronikkarte 42 symbolisiert und über die Schnittstellen 30, 40 mit der mitbewegten gemeinsamen Elektronikkarte 28 verbunden. Die Steuer- und Auswertungsfunktionalität kann je nach Ausführungsform auf die gemeinsame Elektronikkarte 28 und die weitere Elektronikarte 42 verteilt werden.

Zur Auswertung wird vorzugsweise mit einem Lichtlaufzeitverfahren die Distanz zu einem angetasteten Objekt gemessen. Dazu wird in einem phasenbasierten System das Sendelicht des Lichtsenders 12 moduliert und eine Phasenbeziehung zu dem Empfangssignal des Lichtempfängers 26 ausgewertet. Alternativ werden in einem pulsbasierten System kurze Lichtpulse zu einem Sendezeitpunkt als Sendelicht ausgesandt und aus dem Empfangssignal deren Empfangszeitpunkt ermittelt. Die jeweilige Winkelstellung, unter welcher der Sendelichtstrahl 16 jeweils ausgesandt wurde, ist von der Winkelmesseinheit ebenfalls bekannt. Somit stehen nach jeder Scanperiode über den Winkel und die Entfernung zweidimensionale Polarkoordinaten aller Objektpunkte in der Überwachungsebene 18 zur Verfügung. Durch eine zusätzliche Verkippung der Optikeinheit 32 können auch dreidimensionale Raumbereiche erfasst werden.

Damit sind die Objektpositionen beziehungsweise Objektkonturen bekannt und können über eine externe Sensorschnittstelle 44 ausgegeben werden. Die externe Sensorschnittstelle 44 oder ein weiterer, nicht gezeigter Anschluss dienen umgekehrt als Parametrierschnittstelle. Bei Anwendungen in der Sicherheitstechnik werden Schutzfel-der, die in der Überwachungsebene 18 konfiguriert werden können, auf unzulässige Eingriffe überwacht, und daraufhin wird gegebenenfalls ein sicherheitsgerichtetes Abschaltsignal über die dann sicher ausgebildete Schnittstelle 44 (OSSD, Output Signal Switching Device) ausgegeben.

Der Lichtsender 12 kann als einfache Lichtquelle, etwa in Form einer Halbleiterdiode, aber auch als beispielsweise zeilen- oder matrixförmige Anordnung zahlreiche Lichtquellen aufgebaut sein. Entsprechend kann es sich bei dem Lichtempfänger um eine einfache Empfangsfläche, etwa einer Photodiode, oder um eine beispielsweise zeilen- oder matrixförmige Anordnung von Lichtempfangselementen handeln, wie einen CCD- oder CMOS-Chip. Damit entsteht dann nicht nur ein einzelner Abtaststrahl, sondern eine entsprechende Vielzahl zur Aufnahme von zweidimensionalen Bilddaten oder dreidimensionalen Bilddaten mit Hilfe eines Lichtlaufzeitverfahrens.

Figur 1 zeigt einen besonders vorteilhaften, regelmäßigen Aufbau. Dabei liegt die gemeinsame Elektronikkarte 28 auf der Drehachse 34, Lichtsender 12 und Lichtempfänger 26 sind einander entgegengesetzt auf ansonsten gleichen Positionen der Vorder- und Rückseite der gemeinsamen Elektronikkarte angeordnet. Die somit gleichen, lediglich in ihrer Richtung entgegengesetzten optischen Achsen von Lichtsender 12 und Lichtempfänger 26 stimmen auch mit denjenigen der Sendeoptik 14, der Empfangslinse 22 und des Spiegelelements 24 überein.

Dieser Aufbau ist besonders vorteilhaft, aber nur beispielhaft zu verstehen. So ist denkbar, für Lichtsender 12 und Lichtempfänger 26 unterschiedliche Elektronikkarten vorzusehen oder diesen beiden Elementen einen Versatz auf der gemeinsamen Elektronikkarte 28 zu geben. Auch können Sendeoptik 14, Empfangslinse 22 oder Spiegelelement 24 gegeneinander und gegen den Lichtsender 12 und Lichtempfänger 26 in nahezu beliebiger Konstellation verkippt werden, solange sich mehrere Kippwinkel hinreichend kompensieren, solange der Sendelichtstrahl 16 in die Überwachungsebene 18 austreten beziehungsweise remittiertes Licht 20 auf den Lichtempfänger 26 geführt werden kann. Beispielsweise kann ein gewisses Verkippen von Empfangslinse 22 und Spiegelelement 24 hilfreich sein, um Abschattungen der gemeinsamen Elektronikkarte 28 auszuweichen.

## Patentansprüche

1. Optoelektronischer Sensor (10) zur Erfassung von Objekten in einem Überwachungsbereich (18), insbesondere Laserscanner, der einen Lichtsender (12) zum Aussenden eines Sendelichtstrahls (16), einen Lichtempfänger (26) zum Erzeugen eines Empfangssignals aus dem von Objekten in dem Überwachungsbereich (18) remittierten Licht (20), eine Empfangsoptik (22, 24) mit mindestens einer Empfangslinse (22) und einem strahlformenden Spiegelelement zur Bündelung des remittierten Lichts (20) auf den Lichtempfänger (26), eine um eine Drehachse (34) bewegliche Optikeinheit (32), in der Lichtsender (12) und Lichtempfänger (26) samt Empfangsoptik (22, 24) zur periodischen Abtastung des Überwachungsbereichs (18) untergebracht sind, sowie eine Auswertungseinheit (28, 42) zur Erfassung von Informationen über Objekte in dem Überwachungsbereich (18) anhand des Empfangssignals aufweist,
**dadurch gekennzeichnet,**
**dass** in der Optikeinheit (32) eine gemeinsame Elektronikkarte (28) vorgesehen ist, auf deren Vorderseite der Lichtsender (12) und auf deren Rückseite der Lichtempfänger (26) angeordnet ist.

2. Sensor (10) nach Anspruch 1,
wobei die Empfangslinse (22) eine Sammellinse und/oder das Spiegelelement (24) ein Hohlspiegel ist.

3. Sensor (10) nach Anspruch 1 oder 2,
wobei die gemeinsame Elektronikkarte (28) auf der Drehachse (34) angeordnet ist.

4. Sensor (10) nach einem der vorhergehenden Ansprüche,
wobei die gemeinsame Elektronikkarte (28) eine Schnittstelle (30) zur drahtlosen Datenübertragung und/oder drahtlosen Energieversorgung aufweist.

5. Sensor (10) nach einem der vorhergehenden Ansprüche,
wobei die Auswertungseinheit (28, 42) dafür ausgebildet ist, eine Lichtlaufzeit zwischen Aussenden des Sendelichtstrahls (16) und Empfang des remittierten Lichts (20) und daraus einen Objektabstand zu berechnen.

6. Verfahren zur Erfassung von Objekten in einem Überwachungsbereich (18), bei dem mit einem Lichtsender (12) ein Sendelichtstrahl (16) ausgesandt, das von Objekten in dem Überwachungsbereich (18) remittierte Licht (20) durch eine Empfangsoptik (22, 24) mit mindestens einer Empfangslinse (22) und einem strahlformenden Spiegelelement (24) auf einen Lichtempfänger (26) gebündelt und daraus ein Empfangssignal erzeugt wird, anhand dessen Informationen über Objekte in dem Überwachungsbereich (18) erfasst werden, wobei der Überwachungsbereich (18) periodisch abgetastet wird, indem eine Optikeinheit (32) um eine Drehachse (34) bewegt wird, in der Lichtsender (12) und Lichtempfänger (26) samt Empfangsoptik (22, 24) untergebracht sind,
**dadurch gekennzeichnet,**
**dass** sich mit der Optikeinheit (32) Lichtsender (12) und Lichtempfänger (26) auf einer Vorderseite und einer Rückseite einer gemeinsamen Elektronikkarte (28) um die Drehachse (34) bewegen.

## Claims

1. An optoelectronic sensor (10) for the detection of objects in a monitoring area (18), in particular a laser scanner, comprising a light transmitter (12) for transmitting a transmission light beam (16), a light receiver (26) for generating a reception signal from light (20) remitted by objects in the monitoring area (18), reception optics (22, 24) having at least one reception lens (22) and a beam-shaping mirror element for focusing the remitted light (20) onto the light receiver (26), an optic unit (32) movable with respect to an axis of rotation (34), light transmitter (12) and light receiver (26) including the reception optics (22, 24) being placed in the optic unit (32) for periodically scanning the monitoring area (18), as well as an evaluation unit (28, 42) for detecting information about objects in the monitoring area (18) based on the reception signal,
**characterized in that** a common circuit board (28) is provided in the optic unit (32), the light transmitter (12) being arranged on a front face and the light receiver (26) being arranged on a back face of the common circuit board (28).

2. The sensor (10) according to claim 1,
wherein the reception lens (22) is a focusing lens and/or the mirror element (24) is a hollow mirror.

3. The sensor (10) according to claim 1 or 2,
wherein the common circuit board (28) is arranged on the axis of rotation (34).

4. The sensor (10) according to any of the preceding claims,
wherein the common circuit board (28) comprises an interface (30) for a wireless data communication and/or a wireless supply.

5. The sensor (10) according to any of the preceding claims,
wherein the evaluation unit (28, 42) is configured to calculate a light time of flight between transmission of the transmission light beam (16) and reception of the remitted light (20), and to calculate an object distance on that basis.

6. A method for the detection of objects in a monitoring area (18), wherein a transmission light beam (16) is transmitted by a light transmitter (12), the light (20) remitted by objects in the monitoring area (18) is focused onto a light receiver (26) by reception optics (22, 24) having at least one reception lens (22) and a beam-shaping mirror element (24), and a reception signal is generated from that, based on which information about objects in the monitoring area (18) is detected, wherein the monitoring area (18) is scanned periodically by moving an optic unit (32) with respect to an axis of rotation (34), light transmitter (12) and light receiver (26) including reception optics (22, 24) being placed in the optic unit (32),
**characterized in that** light transmitter (12) and light receiver (26) move together with the optic unit (32) with respect to the axis of rotation (34) on a front face and a back face of a common circuit board (28).

## Revendications

1. Capteur optoélectronique (10) pour la détection d'objets dans une zone de surveillance (18), en particulier scanner à laser, qui comprend un émetteur de lumière (12) pour émettre un rayon de lumière émise (16), un récepteur de lumière (26) pour générer un signal de réception à partir de la lumière (20) réémise par des objets dans la zone de surveillance (18), une optique de réception (22, 24) avec au moins une lentille de réception (22) et un élément miroir de mise en forme de rayons pour focaliser la lumière réémise (20) sur le récepteur de lumière (26), une unité optique (32) mobile autour d'un axe de rotation (34), dans laquelle l'émetteur de lumière (12) et le récepteur de lumière (26) ensemble avec l'optique de réception (22, 24) sont logés pour un palpage périodique de la zone de surveillance (18), ainsi qu'une unité d'évaluation (28, 42) pour recueillir des informations sur des objets dans la zone de surveillance (18) au moyen du signal de réception,
**caractérisé en ce qu'**une carte électronique commune (28) est prévue dans l'unité optique (32), l'émetteur de lumière (12) étant agencé sur le côté antérieur de ladite carte et le récepteur de lumière (26) étant agencé sur le côté postérieur de celle-ci.

2. Capteur (10) selon la revendication 1,
dans lequel la lentille de réception (22) est une lentille convergente et/ou l'élément miroir (24) est un miroir creux.

3. Capteur (10) selon la revendication 1 ou 2,
dans lequel la carte électronique commune (28) est agencée sur l'axe de rotation (34).

4. Capteur (10) selon l'une des revendications précédentes,
dans lequel la carte électronique commune (28) comprend une interface (30) pour la transmission sans fil de données et/ou pour l'alimentation sans fil d'énergie.

5. Capteur (10) selon l'une des revendications précédentes,
dans lequel l'unité d'évaluation (28, 42) est réalisée pour calculer un temps de parcours de la lumière entre l'émission du rayon de lumière émise (16) et la réception de la lumière réémise (20) et pour calculer à partir de celui-ci une distance à l'objet.

6. Procédé pour détecter des objets dans une zone de surveillance (18), dans lequel on émet un rayon de lumière émise (16) avec un émetteur de lumière (12), la lumière réémise (20) par des objets dans la zone de surveillance (18) est focalisée par une optique de réception (22, 24) avec au moins une lentille de réception (22) et un élément miroir (24) de mise en forme des rayons, vers un récepteur de lumière (26) et on engendre à partir de celle-ci un signal de réception, au moyen de ce signal on recueille des informations sur des objets dans la zone de surveillance (18), dans lequel la zone de surveillance (18) est palpée périodiquement, en déplaçant une unité optique (32) autour d'un axe de rotation (34), unité dans laquelle sont logés l'émetteur de lumière (12) et le récepteur de lumière (26) ensemble avec l'optique de réception (22,24),
**caractérisé en ce que**
l'émetteur de lumière (12) et le récepteur de lumière (26) sur un côté avant et sur un côté arrière d'une carte électronique commune (28) se déplacent avec l'unité optique (32) autour de l'axe de rotation (34).
